# EUROPÄISCHE PATENTSCHRIFT

(11) **EP 0 472 102 B1**
(45) Veröffentlichungstag und Bekanntmachung des Hinweises auf die Patenterteilung: **01.03.1995**
(21) Anmeldenummer: 91113613.3
(22) Anmeldetag: 14.08.1991
(51) Int. Cl.: A01B 45/02

(54) **Vertikutierer mit auf einer Messerwelle befestigten Messerscheiben**
Scarifier with blade disks fixed on a shaft
Scarificateur avec un axe portant des disques à lames

(30) Priorität: 24.08.1990 DE 4026739
(43) Veröffentlichungstag der Anmeldung: 26.02.1992
(73) Patentinhaber: SABO-Maschinenfabrik GmbH, D-51645 Gummersbach (DE)
(72) Erfinder: Ostermeier, Heinrich, W-5000 Köln 90 (DE); Brenner, Hans-Josef, W-5063 Overath-Vilkerath (DE)
(74) Vertreter: Harwardt, Günther, Dipl.-Ing.

(56) Entgegenhaltungen:
- EP-A- 0 260 643
- AT-B- 336 334
- FR-A- 2 368 213
- FR-A- 2 384 430
- US-A- 2 827 751
- US-A- 4 724 662

## Beschreibung

Die Erfindung betrifft einen Vertikutierer mit einer quer zu dessen Bewegungsrichtung angeordneten, motorisch drehend angetriebenen Messerwelle, auf der mehrere beabstandete und an ihrer Außenkontur mehrere umfangsverteilte Zähne aufweisende Messer lösbar angebracht sind, wobei die Zähne zwischen den in Antriebsdrehrichtung und Auswurfrichtung vorne liegenden Schneidflanken und den Zahnrücken einen Übergang in Form einer Kopffläche aufweisen und ggfs. eine Fangvorrichtung vorgesehen ist.

Eine solche Ausbildung ist in der EP-A-0260643 beschrieben. Die Kopffläche ist als ebene Fläche ausgebildet. Die Schneidflanke ist mit einem Winkel von 15° zur Mittellinie angeordnet. Sie ist als gerade Fläche ausgebildet und ändert sich unabhängig vom Abwinklungsgrad solange nicht als die Schneidkantenspitze noch auf der Schneidkante liegt. Daraus resultiert, daß sich auch die Auswurfverhältnisse mit der Abnutzung ändert.

In der US-A-4724662 ist ebenfalls ein Vertikutierer mit einer quer zu dessen Bewegungsrichtung angeordneten, motorisch drehend angetriebenen Messerwelle beschrieben. Auf der Messerwelle sind mehrere Messerscheiben mit an ihrer Außenkontur umfangsverteilten Zähne angebracht. Die Zähne weisen radial zur Drehachse der Messerwelle verlaufende Schneidflanken, dazu in einem spitzen Winkel verlaufende gerade Kopfflächen und anschließend zum Zahngrund hin gerade verlaufende Rückenflächen auf. Bei einer solchen Anordnung ändern sich die Auswurfverhältnisse mit der Abnutzung ebenfalls.

Bei dem in der DE-OS 27 13 428 beschriebenen Vertikutierer ist ein Handantrieb vorgesehen. Es sind zwei Messerwellen vorhanden, die parallel zueinander angeordnete Messer aufweisen. Die in Schieberichtung vordere Messerwelle greift in den Boden ein und dient als Antrieb für die dahinter angeordnete Messerwelle. Dabei rotiert die hintere, über ein Getriebe angetriebene Welle Schneller als die vordere treibende Welle.

Die dort vorgeschlagene Ausbildung der einzelnen Messerscheiben hat erhebliche Nachteile, weil die sehr spitz ausgebildeten Zähne schnell abnutzen und damit nur eine geringe Standzeit aufweisen. Ferner ist das beschriebene Gerät obwohl vorgesehen, nicht zum Antrieb durch einen Motor geeignet, weil nach dem vorgegebenen Prinzip die in Bewegungsrichtung vorne liegende Messerwelle durch den Motor anzutreiben wäre. Der Antrieb kann dabei nur mit einer Geschwindigkeit erfolgen, die der Bewegungsgeschwindigkeit der Bedienungsperson, die das Gerät handhabt, angepaßt ist. Die für ein sauberes Schneiden erforderliche Drehzahl für die abhängig von der vorderen Messerwelle angetriebenen hinteren Messerscheiben erlaubt kein sauberes Schneiden, weil die aufzubringenden Drehzahlen zu gering sind. Aus diesem Grunde ist das Gerät auch nur für ein direktes Ablegen des Vertikutiergutes auf den Boden geeignet. Die Drehzahlen reichen nicht aus, um einen gezielten Auswurf des aus dem Boden herausgelösten Gutes zu erreichen.

Ein weiterer Nachteil besteht darin, daß bei der Abnutzung in erheblichem Maße ein großer Radius an den Zahnspitzen erzeugt wird, so daß die Zähne der Messerscheiben nicht mehr im schneidenden Sinne wirken, sondern das Material herausdrücken.

Bei motorbetriebenen Messerwellen für Vertikutierer ist es ferner bekannt (z.B. DE-U1-8624652), zweischneidige Messer vorzusehen, wobei jedoch die Gefahr besteht, daß aufgrund der geringen Anzahl von nacheinander eingreifenden Schneiden eine Art klopfende Bearbeitung entsteht, da der Zeitanteil, den das Gerät und damit die Messer im Vorschubsinne zurückgelegt haben, bis die nächste Schneide in Eingriff kommt, relativ groß ist. Entweder entsteht hierdurch ein absatzweises Einschneiden und kein kontinuierlicher Schnitt oder aber ein Eindrücken in die Rasenoberfläche.

Der Erfindung liegt die Aufgabe zugrunde, einen Vertikutierer vorzuschlagen, bei dem die zur Behandlung der Rasenfläche vorgesehenen Messerscheiben über eine große Standzeit ihre Wirkungsweise beibehalten und zum gezielten Auswerfen des herausgeschnittenen Gutes geeignet sind.

Diese Aufgabe wird erfindungsgemäß dadurch gelöst, daß die Messer als Messerscheiben ausgebildet sind, daß der Auswurf des herausgeschnittenen Gutes durch eine Prallschürze oder eine Fangeinrichtung begrenzt ist, daß die Kopffläche ein auf der Drehachse der Messerwelle zentrierter Kreisbogen ist und daß die Schneidflanken der Zähne ausgehend von den radial außen liegenden Schneidkanten zum Zahngrund hin als die Auswurfrichtung und Auswurfweite des abgeschnittenen Gutes bezüglich des vorgegebenen Auftreffbereiches des herausgeschnittenen Gutes an der Prallschürze oder in der Fangeinrichtung und entsprechend der Durchmesserreduzierung der mit vorgegebener Drehzahl rotierenden Messerscheiben korrigierende konkave Kurven ausgebildet sind.

Von Vorteil ist, daß die Messer eine große Standzeit haben, weil festgestellt worden ist, daß im Übergang zwischen der Kopffläche und der Schneidflanke ein relativ geringerer Verschleiß eintritt. Hieraus folgt auch, daß beim Eintreten von Verschleiß eine geringere Durchmesserveränderung an der Messerscheibe eintritt, als dies beispielsweise beim Stand der Technik mit spitz aufeinanderzuverlaufenden Zähnen der Fall ist. Darüberhinaus ist die Abrundung, die sich am Übergang zwischen Kopffläche und Schneidflanke einstellt, wesentlich geringer, als in einem Fall, bei dem eine Spitze vorhanden ist. Darüberhinaus wird durch die Mehrzahl von schneidenden Zähnen je Messerscheibe ein kontinuierlicher Schnitt erreicht, der sich auch in einem geringeren Leistungsbedarf bemerkbar macht. Bevorzugt sind Messerscheiben mit acht umfangsverteilten Zähnen vorgesehen. Ein günstiges Verhalten ergibt sich ferner dadurch, daß die Kopffläche ein auf der Drehachse der Messerwelle zentrierter Kreisbogen ist.

Das gezielte Ablegen auf den Boden als auch in einer Fangeinrichtung für das ausgeschnittene Gut wird dadurch gewährleistet, daß die Schneidflanke ausgehend von der radial außenliegenden Schneidkante zum Zahngrund hin konkav verläuft.

Die Kurve, die die Schneidflanke bildet, ist so festgelegt, daß ein gezielter Auswurf in die Fangeinrichtung erfolgt. Es wird also nach Wurfrichtung und Wurfweite gewährleistet, daß über den gesamten nutzbaren Bereich der Messerscheibe und bei der vorgegebenen Drehzahl, die in der Regel etwa in der Größenordnung von 3000 U/min. liegt, eine sich ändernde Wurfparabel erzielt wird, bei der jeweils das auszuwerfende Gut sicher in der Fangeinrichtung landet. Wenn beim Vertikutierer für das direkte Ablegen auf den Boden eine Prallschürze vorgesehen ist, sorgt diese dafür, daß die Energie des ausgeworfenen Gutes gemindert wird. Gleichzeitig dient diese Schürze dazu, das Gut entsprechend abzuleiten. Bevorzugt ist dabei ein Teil der Verschlußklappe, die den Auswurf abdeckt, flexibel als Prallschürze ausgebildet.

Das Schneidverhalten kann auch noch dadurch verbessert werden, wenn die Zähne beispielsweise geschränkt sind. So kann mit einem relativ dünnen Blatt eine breitere Nut in den Boden geschnitten werden. Dabei wird auch gleichzeitig der Reibanteil verringert, obwohl dieser wegen der nur geringen Einschneidtiefe relativ begrenzt ist.

Anstelle der Schränkung kann auch eine radial verlaufende Wellung vorgesehen sein.

Bevorzugt wird die Schneidkante durch eine Kurve dargestellt, welche aus mehreren Kreisbögen zusammengesetzt sein kann, wobei die Krümmung der Kreisbögen zu dem Zahngrund hin jeweils zunimmt.

Der Leistungbedarf kann dadurch günstig beeinflußt werden, daß die Messerscheiben mit einem vom Kreisquerschnitt abweichenden zentralen Durchbruch versehen sind, mit welchem sie auf der im Querschnitt entsprechend gestalteten Messerwellen drehfest und über zwischen ihnen angebrachten Hülsen zueinander beanstandet gehalten sind.

Dabei sind die Messerscheiben bevorzugt auf der Messerwelle umfangsversetzt zueinander angeordenet.

Dies kann in einfacher Weise dadurch erreicht werden, daß die Messerwelle und der Durchbruch der Messerscheiben im Querschnitt als Mehrkant gestaltet sind und daß die Anzahl der Kanten der Mehrkante und die Anzahl der Zähne der Messerscheiben sich dadurch unterscheiden, daß die eine Anzahl eine gerade Anzahl und die andere eine ungerade Anzahl ist.

Dies kann auch dadurch erreicht werden, daß die Messerwelle über ihre Länge verdrillt ist. Alternativ ist es jedoch auch möglich, die Messerwelle im Querschnitt als Mehrkant auszubilden. Der Durchbruch der Messerscheibe ist ebenfalls als Mehrkant auszubilden. Um die unterschiedlichen Zuordnungen erreichen zu können, ist jedoch vorgesehen, daß der Mehrkant des Durchbruches der Messerscheibe mindestens die doppelte Anzahl von Kanten aufweist, als der Mehrkant der Messerwelle.

Mit der vorgesehenen Teilung der Zähne, ist eine Ausbildung der Messerwelle im Querschnitt als Vierkant und die des Durchbruches der Messerscheibe als Achtkant besonders günstig.

Ein bevorzugtes Ausführungsbeispiel der Erfindung ist in der Zeichnung schematisch dargestellt.

Es zeigt
- Figur 1: die Seitenansicht eines Vertikutierers, wobei die Abdeckung, die den Antrieb für die Messerwelle abdeckt, abgenommen ist.
- Figur 2: einen Querschnitt zu Figur 1,
- Figur 3: eine Ansicht auf eine Messerscheibe,
- Figur 4: eine Seitenansicht zu Figur 3 und
- Figur 5: einen Querschnitt durch die Messerwelle ohne Messerscheibe.

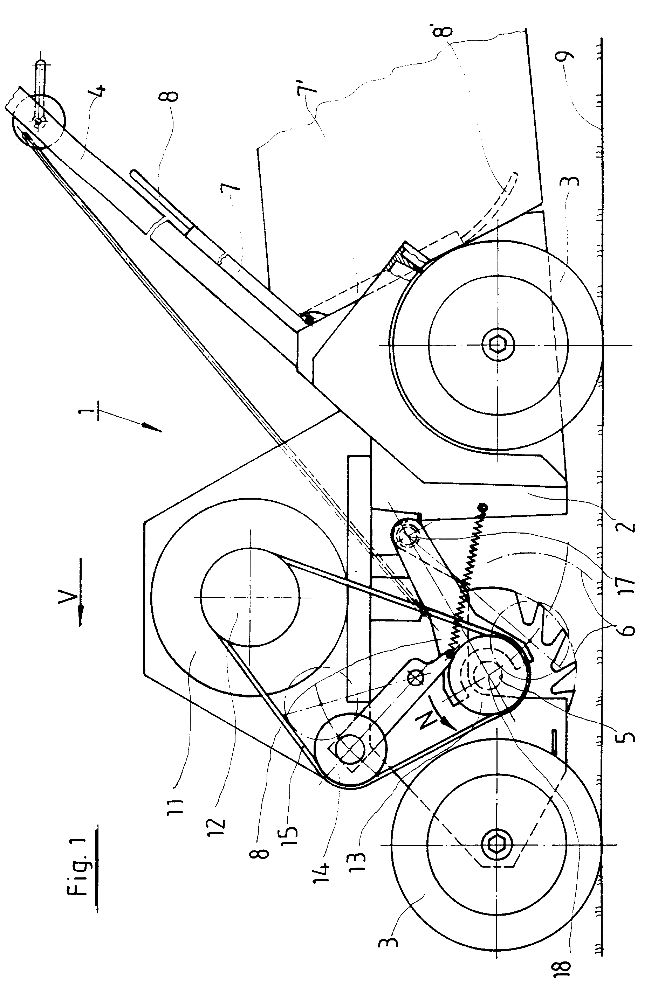

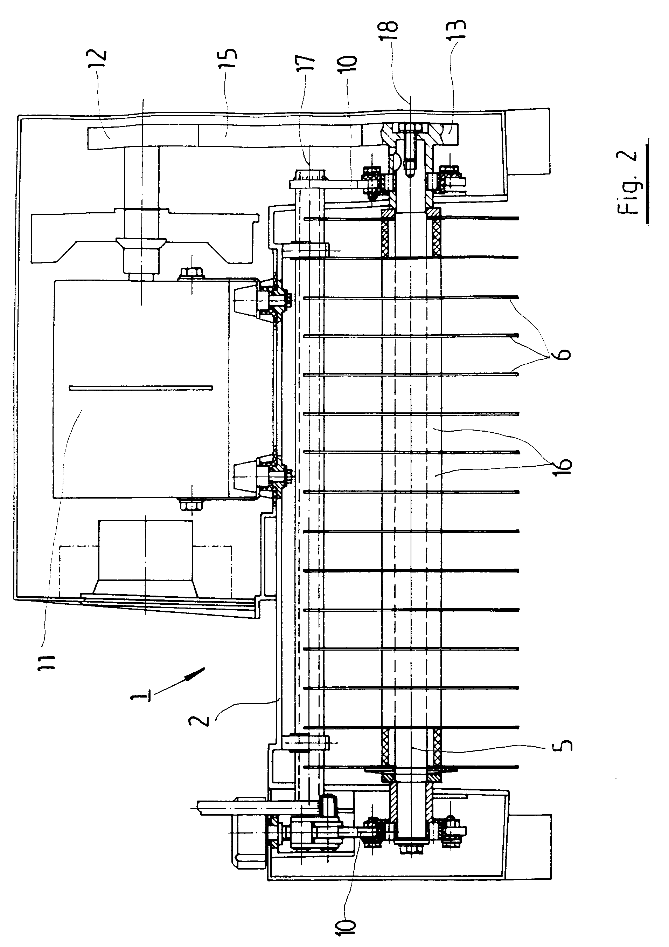

Der in den Figuren 1 und 2 dargestellte Vertikutierer 1 besitzt ein Gehäuse 2, an dem Vorder- und Hinterräder 3 ortsfest angebracht sind. In dem vom Gehäuse abgedeckten Bereich ist eine Messerwelle 5, auf der Messerscheiben 6 im Abstand zueinander drehfest angeordnet sind, mit den Enden an Schwenkarmen 10 gelagert, welche um die Schwenkachse 17 höhenverschwenkbar sind. Von den Messerscheiben 6 beim Einschnitt in die Rasenfläche 9 aufgenommenes und abgetrenntes Gut wird von diesen in Richtung auf die Klappe 7 nach hinten befördert. Für den Fall, daß an den Vertikutierer 1 ein Fangsack angeschlossen ist, befindet sich die Klappe 7 in der angehobenen Stellung. Die Klappe 7 umfaßt auch eine Prallschürze 8, die flexibel gestaltet ist und einen Teil der Auswurföffnung abdeckt, wenn der Fangsack entfernt ist. In diesem Fall wird das aufgenommene Gut in Richtung auf die elastische Prallschürze 8' befördert, die das Gut umlenkt und einen Austritt zur Ablage auf die Rasenfläche 9 hinter dem Vertikutierer 1 ermöglicht. Die Messerwelle 5 ist mit einer Riemenscheibe 13 versehen. Sie wird um die Drehachse 18 von dem Motor 11, der als Elektro- oder Benzinmotor gestaltet sein kann, in Drehrichtung N drehend angetrieben. Hierzu ist der Motor 11 ebenfalls mit einer Riemenscheibe 12 versehen. Über diese ist ein Riemen 15 geführt. Ferner ist eine Spannrolle 14, die federbelastet ist, vorhanden. Für den Vertikutiervorgang wird der Vertikutierer 1 in der Pfeilrichtung V durch die an den Führungsholmen 4 angreifende Bedienungsperson bewegt. Die Messerwelle 5 mit den Messerscheiben 6 dreht sich in Drehrichtung N.

Aus Figur 2 ist ferner erkennbar, daß in axialer Folge mehrere Messerscheiben 6 beabstandet zueinander auf der Messerwelle 5 drehfest angebracht sind. Zwischen den einzelnen Messerscheiben 6 sind Distanzhülsen 16 angeordnet.

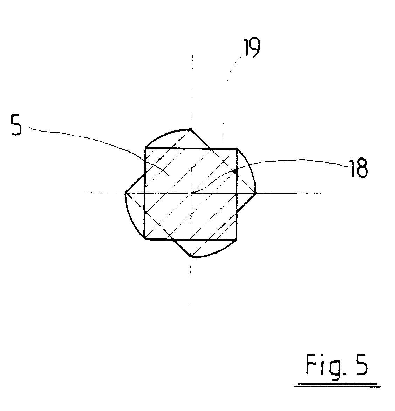

Die Messerwelle 5 ist, wie aus Figur 5 ersichtlich, im Querschnitt als Vierkant gestaltet. Sie weist also vier rechtwinklig zur aneinander verlaufende Flächen als Außenfläche 19 auf.

Eine Messerscheibe 6 ist in den Zeichnungsfiguren 3 und 4 dargestellt. Es ist erkennbar, daß diese mehrere umfangsverteilte Zähne 20 besitzt. Die Zähne 20 haben eine in Drehrichtung N vorne liegende Schneidflanke 21, die kurvenförmig gestaltet ist. Zwischen der Schneidflanke 21 und den Zahnrücken 22 des Zahnes 20 ist eine als Kreisbogen mit dem Radius R um die Drehachse 18 gestaltete Kopffläche 23 vorhanden. Deren Vorderkante bildet mit der Schneidflanke 21 die Schneidkante 25. Ausgehend von der Schneidkante 25 in Richtung auf den Zahngrund 24 verläuft die Schneidflanke 21 konkav gewölbt. Der Kurvenverlauf ist so gestaltet, daß die Schneidflanke 21 das von der Schneidkante 25 der Messerscheibe 6 abgetrennte Gut in Richtung über die Auswurföffnung gezielt in den Fangsack entsprechend Figur 1 ausgeworfen wird. Da sich mit Abnutzung des Durchmessers der Messerscheibe 5 auch die Abwurfverhältnisse ändern, wird durch die Kurvenform eine Konstanthaltung der Wurfweite und Richtung und insbesondere des richtigen Auftreffbereiches im Fangsack gewährleistet.

Um eine gleichmäßige Belastung zu erreichen, ist vorgesehen, daß die voneinander beabstandeten Messerscheiben 6 auf der Messerwelle 5 umfangsversetzt zueinander angeordnet sind. Diese Umfangsversetzung kann dadurch erzielt werden, daß der Durchbruch 26 in der Messerscheibe 6 als Vielkant gestaltet ist. Bevorzugt ist der Vielkant mit einer Kantenzahl gestaltet, die doppelt so groß ist, wie die der Messerwelle 5. Wenn also ein Vierkant als Messerwelle 5 vorgesehen ist, ist der Durchbruch 26 als Achtkant gestaltet. Es können also hierdurch die verschiedensten Positionen in Umfangsrichtung eingestellt werden. Alternativ ist es auch möglich, die Messerwelle 5 und den Durchbruch 26 der Messerscheibe 6 als Vierkant auszubilden, wobei dann jedoch die Messerwelle 5 über ihre Länge verdrillt ist. Dies ist aus Figur 5 ersichtlich.

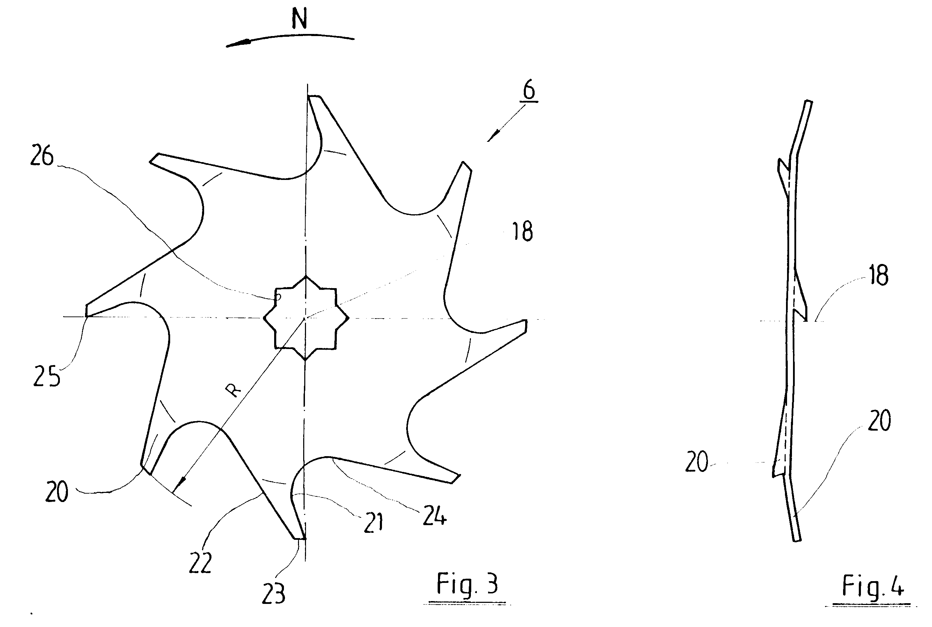

Ferner ist es möglich, die Zähne 20 zu schränken. Dies ist aus der Seitenansicht gemäß Figur 4 erkennbar.

### Bezugszeichenliste

- 1: Vertikutierer
- 2: Gehäuse
- 3: Räder
- 4: Holm
- 5: Messerwelle
- 6: Messerscheibe
- 7: Klappe
- 8: Prallschürze
- 9: Rasenfläche
- 10: Schwenkarm
- 11: Motor
- 12: Riemenscheibe des Motors
- 13: Riemenscheibe der Messerwelle
- 14: Spannrolle
- 15: Riemen
- 16: Distanzhülse
- 17: Schwenkachse
- 18: Drehachse
- 19: Außenfläche der Messerwelle
- 20: Zähne
- 21: Schneidflanke
- 22: Zahnrücken
- 23: Kopffläche
- 24: Zahngrund
- 25: Schneidkante
- 26: Durchbruch
- N: Antriebsdrehrichtung
- V: Vorschubrichtung
- R: Radius der Kopffläche

## Patentansprüche

1. Vertikutierer (1) mit einer quer zu dessen Bewegungsrichtung angeordneten, motorisch drehend angetriebenen Messerwelle (5), auf der mehrere beabstandete und an ihrer Außenkontur mehrere umfangsverteilte Zähne (20) aufweisende Messer (6) lösbar angebracht sind, wobei die Zähne (20) zwischen den in Antriebsdrehrichtung (N) und Auswurfrichtung vorne liegenden Schneidflanken (21) und den Zahnrücken (22) einen Übergang in Form einer Kopffläche (23) aufweisen und ggfs. eine Fangvorrichtung vorgesehen ist,
dadurch gekennzeichnet,
daß die Messer (6) als Messerscheiben (6) ausgebildet sind,
daß der Auswurf des herausgeschnittenen Gutes durch eine Prallschürze (8) oder eine Fangeinrichtung begrenzt ist, daß die Kopffläche (23) ein auf der Drehachse (18) der Messerwelle (5) zentrierter Kreisbogen ist und daß die Schneidflanken (21) der Zähne (20) ausgehend von den radial außen liegenden Schneidkanten (25) zum Zahngrund (24) hin als die Auswurfrichtung und Auswurfweite des abgeschnittenen Gutes bezüglich des vorgegebenen Auftreffbereiches des herausgeschnittenen Gutes an der Prallschürze (8) oder in der Fangeinrichtung und entsprechend der Durchmesserreduzierung der mit vorgegebener Drehzahl rotierenden Messerscheiben (6) korrigierende konkave Kurven ausgebildet sind.

2. Vertikutierer nach Anspruch 1,
dadurch gekennzeichnet,
daß die Zähne (20) geschränkt sind.

3. Vertikutierer nach Anspruch 1,
dadurch gekennzeichnet,
daß die Messerscheibe (6) radial gewellt ist.

4. Vertikutierer nach Anspruch 1,
dadurch gekennzeichnet,
daß die Kurve aus mehreren Kreisbögen zusammengesetzt ist, deren Krümmung zum Zahngrund (24) hin zunimmt.

5. Vertikutierer nach Anspruch 1,
dadurch gekennzeichnet,
daß die Messerscheiben (6) mit einem vom Kreisquerschnitt abweichenden zentralen Durchbruch (26) versehen sind, mit welchem sie auf der im Querschnitt entsprechend gestalteten Messerwelle (5) drehfest und über zwischen ihnen angebrachten Hülsen (16) zueinander beabstandet gehalten sind.

6. Vertikutierer nach Anspruch 1,
dadurch gekennzeichnet,
daß die Messerscheiben (6) auf der Messerwelle (5) umfangsversetzt zueinander angeordnet sind.

7. Vertikutierer nach den Ansprüchen 5 und 6,
dadurch gekennzeichnet,
daß die Messerwelle (5) über ihre Länge verdrillt ist.

8. Vertikutierer nach den Ansprüchen 6 und 7,
dadurch gekennzeichnet,
daß die Messerwelle (5) und der Durchbruch (26) der Messerscheiben (6) im Querschnitt als Mehrkant gestaltet sind und daß die Anzahl der Kanten der Mehrkante und die Anzahl der Zähne (20) der Messerscheiben (6) sich dadurch unterscheiden, daß die eine Anzahl eine gerade Anzahl und die andere eine ungerade Anzahl ist.

9. Vertikutierer nach den Ansprüchen 5 und 6,
dadurch gekennzeichnet,
daß die Messerwelle (5) im Querschnitt als Mehrkant ausgebildet ist und der Durchbruch (26) der Messerscheibe (6) als Mehrkant mit mindestens der doppelten Anzahl von Kanten des Mehrkantes der Messerwelle (5) gestaltet ist.

10. Vertikutierer nach Anspruch 9,
dadurch gekennzeichnet,
daß die Messerwelle (4) als Vierkant und der Durchbruch (26) der Messerscheibe (6) als Achtkant ausgebildet ist.

11. Vertikutierer nach Anspruch 1,
dadurch gekennzeichnet,
daß zur Begrenzung des Auswurfs eine flexible Prallschürze (8) vorgesehen ist.

## Claims

1. A scarifier (1) having a cutter shaft (5) which is arranged transversely relative to the direction of movement of the scarifier, which is rotatably driven by a motor and to which there is removably attached a plurality of spaced cutters (6) whose outer contours comprise a plurality of circumferentially distributed teeth (20) which, between the cutting flanks (21) positioned in front between the driving direction of rotation (N) and the direction of ejection, comprise a region of transition in the form of a head face (23), with a catching device being provided optionally,
characterised in
that the cutters (6) are provided in the form of cutting discs (6), that ejection of the cut material is delimited by a deflecting screen (8) or a catching device, that the head face (23) constitutes a circular arch centred on the rotational axis (18) of the cutter shaft (6) and that, starting from the radially outer cutting edges (25) towards the tooth base (24), the cutting flanks (21) of the teeth (20) are provided in the form of concave curves which correct the direction of ejection and the width of ejection of the cut material in respect of the predetermined region of impact of the cut material on the deflecting screen (8) or in the catching device and in accordance with the reduction in diameter of the cutting discs (6) rotating at a predetermined speed.

2. A scarifier according to claim 1,
characterised in
that the teeth (20) are staggered.

3. A scarifier according to claim 1,
characterised in
that the cutting disc (6) is radially undulating.

4. A scarifier according to claim 1,
characterised in
that the curve is composed of a plurality of circular arches whose curvatures increase towards the tooth base (24).

5. A scarifier according to claim 1,
characterised in
that the cutting discs (6) are each provided with a central aperture (26) which deviates from the circular cross-section and by means of which they are non-rotatably held on the cutter shaft (5) whose cross-section is shaped accordingly, while simutaneously being spaced relative to one another by sleeves (16) arranged therebetween.

6. A scarifier according to claim 1,
characterised in
that the cutting discs (6) are arranged on the cutter shaft (5) so as to be circumferentially offset relative to one another.

7. A scarifier according to claims 5 and 6,
characterised in
that the cutter shaft (5) is twisted along its length.

8. A scarifier according to claims 6 and 7,
characterised in
that the cutter shaft (5) and the aperture (26) of the cutting discs (26) have polygonal cross-sections and that the number of sides of the polygon and the number of teeth (20) of the cutting discs (6) differ in that the one number is an even number and the other number an odd number.

9. A scarifier according to claims 5 and 6,
characterised in
that the cross-section of the cutter shaft (5) is provided in the form of a polygon and that the aperture (26) of the cutting disc (6) constitutes a polygon with at least double the number of sides of the polygon of the cutter shaft (5).

10. A scarifier according to claim 9,
characterised in
that the cutter shaft (5) is square and that the aperture (26) of the cutting disc (6) is octagonal.

11. A scarifier according to claim 1,
characaterised in
that for the purpose of delimiting ejection, there is provided a resilient deflecting screen (8).

## Revendications

1. Scarificateur agricole (1) comprenant un arbre à couteaux (5) agencé transversalement à la direction de déplacement de l'appareil et entraîné en rotation par un moteur, plusieurs couteaux (6) espacés les uns des autres et présentant plusieurs dents (20) réparties à la périphérie sur leur contour extérieur étant montées de façon détachable sur ledit arbre, les dents (20) présentant, entre les flancs de coupe (21) situées en avant dans la direction de rotation d'entraînement (N) et dans la direction de rejet et le dos (22) des dents, une transition sous la forme d'une surface de sommet (23), et dans lequel on prévoit le cas échéant un dispositif de réception,
caractérisé en ce que les couteaux (6) sont réalisés sous la forme de disques de couteaux (6), en ce que le rejet du produit découpé est limité par un tablier de projection (8) ou un dispositif de captage, en ce que la surface de sommet (23) est un arc circulaire centré sur l'axe de rotation (18) de l'arbre à couteaux (5) et en ce que les flancs de coupe (21) des dents (20) sont réalisés, en partant depuis les arêtes de coupe (25) situées radialement à l'extérieur et en allant en direction du fond (24) des dents, sous la forme de courbes concaves qui corrigent la direction et la largeur de rejet du produit découpé par rapport à la région de chute prédéterminée du produit découpé contre le tablier de projection (8), ou dans la direction de captage, et en correspondance de la réduction du diamètre des disques de couteaux (6) qui tournent avec une vitesse de rotation prédéterminée.

2. Scarificateur agricole selon la revendication 1, caractérisé en ce que les dents sont croisées.

3. Scarificateur agricole selon la revendication 1, caractérisé en ce que le disque de couteau (6) est ondulé radialement.

4. Scarificateur agricole selon la revendication 1, caractérisé en ce que la courbe se compose de plusieurs arcs circulaires, dont la courbure augmente en direction du fond des dents (24).

5. Scarificateur agricole selon la revendication 1, caractérisé en ce que les disques de couteaux (6) sont pourvus d'une traversée centrale (26) dont la section diffère d'une section circulaire, les disques de couteaux étant maintenus solidairement en rotation au moyen desdites ouvertures sur l'arbre à couteaux (5), de section réalisée en correspondance, et les disques de couteaux étant maintenus à distance les uns des autres au moyen de douilles (16) disposées entre eux.

6. Scarificateur agricole selon la revendication 1, caractérisé en ce que les disques de couteaux (6) sont agencés avec un décalage périphérique les uns par rapport aux autres sur l'arbre à couteaux (5).

7. Scarificateur agricole selon les revendications 5 et 6, caractérisé en ce que l'arbre à couteaux (5) est torsadé sur sa longueur.

8. Scarificateur agricole selon les revendications 6 et 7, caractérisé en ce que l'arbre à couteaux (5) et la traversée (26) des disques de couteaux (6) sont réalisés en section sous la forme d'un polygone, et en ce que le nombre des côtés du polygone et le nombre des dents (20) des disques de couteaux (6) diffèrent en ce que l'un de ces nombres est un nombre pair et l'autre un nombre impair.

9. Scarificateur agricole selon les revendications 5 et 6, caractérisé en ce que l'arbre à couteaux (5) est réalisé en section sous la forme d'un polygone, et en ce que la traversée (26) du disque de couteaux (6) est réalisée sous la forme d'un polygone qui a au moins un nombre de côtés double de celui du polygone de l'arbre à couteaux (5).

10. Scarificateur agricole selon la revendication 9, caractérisé en ce que l'arbre à couteaux (4) est réalisé sous la forme d'un carré, et la traversée (26) du disque de couteau (6) est réalisée sous la forme d'un octogone.

11. Scarificateur agricole selon la revendication 1, caractérisé en ce qu'il est prévu un tablier de projection flexible (8) pour limiter le rejet.
